# EUROPEAN PATENT APPLICATION

(11) **EP 4 641 422 A1**
(43) Date of publication of application: **29.10.2025**
(21) Application number: 24315211.3
(22) Date of filing: 23.04.2024
(51) Int. Cl.: G06F 21/62

(54) **METHOD AND SYSTEM FOR HOSTED ACCESS AND PROCESSING OF DATA**

(71) Applicant: Amadeus S.A.S., 06410 Biot (FR)
(72) Inventor: Driencourt, Loic Luc, 06410 Biot (FR); Demazeau, Michel, 06410 Biot (FR); Radigois, Emeline, 06410 Biot (FR); Sabran, Thierry, 06410 Biot (FR); Zente, Marjorie, 06410 Biot (FR)
(74) Representative: Samson & Partner Patentanwälte mbB

(57) **Abstract**

A method includes: establishing, at a server, a connection with a data source storing a plurality of records; storing, at the server, mapping data defining a set of access category indicators, and for each access category indicator, a plurality of corresponding access type indicators; storing, at the server, an access definition including (i) a record identification criterion, (ii) one of the access category indicators, and (iii) an access restriction associated with the access category indicator; receiving, from a client device, a request to access a portion of the plurality of records, the request including one of the access type indicators; determining, from the mapping data, that the access type indicator corresponds to the access category indicator of the access definition; and in response to determining that the portion of the plurality of records satisfies the record identification criterion, responding to the request according to the access restriction.

## Description

### BACKGROUND

A wide variety of systems generate and/or store large volumes of data with varying degrees of sensitivity. For example, banking systems, travel-provisioning systems, healthcare-related systems, and the like, may contain significant volumes of customer information (e.g., personally identifying information and the like). The handling of sensitive data can subject such systems to competing constraints: on the one hand, a need to allow various types of system operators and users to access the information (e.g., customer service staff, information technology staff, and the like), and on the other hand, a need to maintain confidentiality of sensitive information by limiting access to such information.

### SUMMARY

Examples disclosed herein include a method, comprising: establishing, at an intermediation server, a connection with a data source storing a plurality of records; storing, at the intermediation server, mapping data defining a set of access category indicators , and for each access category indicator, a plurality of corresponding access type indicators; storing, at the intermediation server, an access definition including (i) a record identification criterion , (ii) one of the access category indicators, and (iii) an access restriction associated with the access category indicator; receiving, from a client device, a request to access a portion of the plurality of records, the request including one of the access type indicators; determining, from the mapping data, that the access type indicator corresponds to the access category indicator of the access definition; and in response to determining that the portion of the plurality of records satisfies the record identification criterion, responding to the request according to the access restriction.

The method can further include providing, at the server, a plurality of hosted data access functions to the client device; wherein receiving the request from the client device includes receiving a selection of one of the hosted data access functions.

The plurality of hosted data access functions can correspond to respective ones of the access type indicators.

The access definition can include: a plurality of access category indicators; and for each access category indicator, a corresponding access restriction.

The access restriction can includes an obfuscation indicator; responding to the request can include providing access to a first portion of a requested record, and obfuscating a second portion of the requested record.

The access restriction can include a time period; and responding to the request can include providing access to the portion of the plurality of records until the time period expires.

Providing access to the portion of the plurality of records can include generating a copy of the plurality of records in hosted storage at the server.

The access definition can further include a requestor type indicator, and an access restriction criterion corresponding to the requestor type indicator.

Additional examples disclosed herein include a computing device, including: a memory storing: mapping data defining a set of access category indicators, and for each access category indicator, a plurality of corresponding access type indicators; and an access definition including (i) a record identification criterion, (ii) one of the access category indicators, and (iii) an access restriction associated with the access category indicator a processor configured to: establish a connection with a data source storing a plurality of records; receive, from a client device, a request to access a portion of the plurality of records, the request including one of the access type indicators; determine, from the mapping data, that the access type indicator corresponds to the access category indicator of the access definition; and in response to determining that the portion of the plurality of records satisfies the record identification criterion, respond to the request according to the access restriction.

Further examples disclosed herein include a non-transitory computer-readable medium storing a plurality of instructions executable by a processor of a computing device to: store mapping data defining a set of access category indicators, and for each access category indicator, a plurality of corresponding access type indicators; store an access definition including (i) a record identification criterion, (ii) one of the access category indicators, and (iii) an access restriction associated with the access category indicator; establish a connection with a data source storing a plurality of records; receive, from a client device, a request to access a portion of the plurality of records, the request including one of the access type indicators; determine, from the mapping data, that the access type indicator corresponds to the access category indicator of the access definition; and in response to determining that the portion of the plurality of records satisfies the record identification criterion, respond to the request according to the access restriction.

### BRIEF DESCRIPTIONS OF THE DRAWINGS

Embodiments are described with reference to the following figures.
FIG. 1 is a diagram illustrating a system for hosted access and processing of data.
FIG. 2 is a flowchart of a method of managing access to data.
FIG. 3 is a diagram illustrating example mapping data obtained at block 210 of the flowchart of FIG. 2.
FIG. 4 is a diagram illustrating example access definitions obtained at block 210 of the flowchart of FIG. 2.
FIG. 5 is a diagram illustrating an example performance of blocks 215 to 235 of the flowchart of FIG. 2.

### DETAILED DESCRIPTION

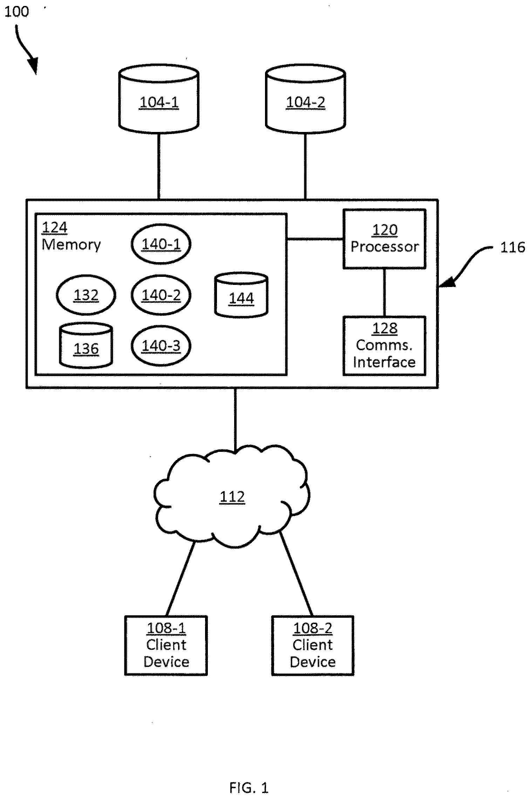

FIG. 1 illustrates a system 100 for hosted access and processing of data. The system 100 includes one or more data sources 104-1, 104-2, collectively referred to as the data sources 104, and generically referred to as a data source 104. Similar nomenclature is used for other elements discussed herein, where those elements are given reference numbers with hyphenated suffixes. The system 100 can include a single data source 104 or more than two data sources 104 in other examples. Each data source 104 can include one or more databases, folder structures, or the like. The specific structure of any given data source 104 is not particularly limited, and the data sources 104 can have different structures from one another.

The system 100 also includes one or more client computing devices 108, of which two examples 108-1 and 108-2 are shown in FIG. 1. The system 100 can include a single client device 108 in some examples, and more than two client devices 108 in other examples. The client devices 108 can include any of a wide variety of computing devices, such as desktop computers, tablet computers, and the like. The client devices 108 can be operated to access the data sources 104 for various purposes, e.g., via a network 112 (e.g., a suitable combination of local- and wide-area networks). For example, the data sources 104 can be under the control of an enterprise or other organization, or accessible to the organization, and the client devices 108 can be operated by employees of the enterprise to perform any of a variety of functions. In other examples, however, the client devices 108 can be external to the entity maintaining the data sources.

The nature of the data in the data sources 104, and of the reasons for which access to that data is sought via the client devices 108, can vary widely. For example, the data source 104-1 can store passenger name records (PNRs) corresponding to travel services and passenger identifying information, and a given client device 108 may request access to certain PNRs from the data source 104-1 to perform aggregation and/or reporting actions. In other examples, data from a data source 104 can be retrieved by a client device 108 to perform diagnostic analysis, visualization functions, or the like.

In some systems, access to data in a data source 104 can involve establishing a direct link to the relevant data source 104 from the requesting client device 108, and retrieving the relevant data at the client device 108. For example, the client device 108 can be configured to perform one or more queries against the data source 104 to retrieve a subset of records from the data source 104. Having obtained copies of the subset of records, the client device 108 can then perform processing activities locally. In these systems, access to the data source 104 by the client device 108 may be mediated, such that certain account credentials or the like are provided by the client device 108 before obtaining access to the data source 104. However, once access is granted and records have been retrieved by the client device 108, those records may be manipulated, shared, published, and the like, at the client device 108 with little or no control being exerted by the data source 104 or the entities that created the data stored in the data source 104 (e.g., customers or the like, whose personal identifying information may have been retrieved by the client device 108).

In other systems, client devices 108 may be provided access to data from a data source 104 by replicating some or all of the data source 104 (e.g., a primary or master data source, where the data is originated) to a secondary repository accessible by certain client devices 108. For example, client devices 108 configured to perform diagnostic functions may make use of a copy of the data source 104, which can be synchronized periodically with the master data source. The replication of a data source 104, or portion thereof, may subsequently bypass access restrictions applied by the data source 104 itself, however, and may increase the likelihood the sensitive data is propagated inappropriately.

In other words, previous mechanisms for client devices 108 to access and manipulate data from the data sources 104 may expose the content of the data sources 104 to actors beyond the operators of the client devices 108. However, if the client devices 108 are prevented from obtaining copies of the data from the data sources 104, the client devices 108 may be unable to perform various functions, such as the above-mentioned diagnostic functions and a wide variety of other actions.

The system 100 mitigates the conflict between the competing priorities of mitigating unauthorized dissemination of sensitive data and facilitating legitimate use of the data by client devices 108. In particular, the system 100 includes a hosted access platform, e.g., deployed on a server 116, enabling the client devices 108 to access and manipulate information from the data sources 104 while retaining control over the dissemination of such information. The server 116 is shown as a discrete computing device in FIG. 1, including a processor 120 (e.g., a central processing unit (CPU), or the like) interconnected with a non-transitory computer-readable medium such as a memory 124 (e.g., a suitable combination of volatile and non-volatile memory elements). The server 116 also includes a communications interface 128, such as a network interface controller (NIC) or the like, configured to communicate with other computing devices over the network 112. The data sources 104 can be stored at the server 116 (e.g., in the memory 124), or can be accessed by the server 116 via the communications interface 128.

In other examples, the server 116 can be implemented as a distributed computing system, e.g., comprising a plurality of discrete sets of computing hardware such as the processor 120, memory 124, and communications interface 128, configured to operate as one logical computing device. The specific configuration of the server 116 can vary depending on the scale of the system 100 (e.g., in terms of computational resources involved in operating the system 100) and/or the geographical distribution of data sources 104 and client devices 108.

The server 116, as described below, implements functionality to not only control access to the data sources 104 by the client devices 108, but also to implement hosted data processing functions for use by the client devices 108, thus reducing or avoiding the need for client devices 108 to obtain local copies of data from the data sources 104, which may later be improperly disseminated.

The server 116, in particular, stores a plurality of applications in the memory 124, executable by the processor 120, to perform the above-mentioned functionality. The applications are described below as being configured to perform various functions. It will be understood that an application is said to be configured to perform a function because when the processor 120 executes that application, the processor 120 performs that function.

As shown in FIG. 1, the memory 124 stores an access control application 132, configured to receive and evaluate requests to access the data sources 104 from the client devices 108. The client devices 108 do not have access directly to the data sources 104, but rather must access the data sources via the server 116. For example, the client devices 108 may access the data sources 104 via network identifiers such as URLs, IP addresses, or the like, that correspond to the server 116 (e.g., specifically to one or more ports corresponding to the application 132). The application 132 can be configured to grant or deny each access request based on configuration settings maintained in the memory 124, e.g., in a repository 136. The configuration settings 136 are discussed in greater detail below.

In addition to the application 132 and the configuration settings 136, the memory 124 maintains one or more hosted applications, also referred to as hosted data access functions. In the present example, the memory 124 stores three hosted applications 140-1, 140-2, and 140-3, although it will be understood that a smaller or greater number of hosted applications 140 can be provided in other examples. Each hosted application can implement one or more data handling functions that, in prior systems, are implemented locally at the client devices 108. For example, the hosted application 140-1 may implement a set of visualization functions, such as report generation algorithms, querying tools, and the like (e.g., functions such as those implemented by the Microsoft^{™} application Power BI). The hosted application 140-2 may implement a set of analytical functions, such as statistical manipulations, text tokenizing functions, and the like. The hosted application 140-3 may, for example, implement sharing functions such as generation of links usable by other client devices 108 to view certain data. A wide variety of other functions can be implemented by the hosted applications 140, and the functions mentioned above can be implemented by different sets of applications than those shown in FIG. 1. That is, the functions mentioned above need not be grouped into three applications 140 as shown, but can instead be grouped in various other ways.

The memory 124 can also maintain a local repository 144, configured to store local (that is, local to the server 116) copies of data from the data sources 104, e.g., for processing, visualization, and other manipulations by the client devices 108. The repository 144 can provide a hosted working space for the client devices 108, mitigating the need for the client devices 108 to download local (that is, local to the client devices 108) copies of the data.

The server 116, in brief, permits the client devices 108 to access and manipulate data from the data sources 104 according to various restrictions defined in the configuration settings 136. Rather than granting or denying access to data in response to an initial request, and then effectively losing control of the data (e.g., once client devices 108 obtain local copies of the data), as in some prior systems, the server 116 implements sufficient functionality in a hosted platform to enable the client devices 108 to not only access data, but also perform downstream processing of that data within the confines of the hosted platform. The server 116 therefore is configured to persistently apply the restrictions defined in the configuration settings 136, mitigating the risk of sensitive data "escaping" the platform.

As will be apparent, the applications 140 may implement a wide variety of functions, and new applications 140 and/or new functions may periodically be implemented within the platform provided by the server 116. The breadth of possible actions provided by the applications 140, and the granularity with which it may be desirable to specify permissions to use those actions, may render the configuration settings 136 difficult to manage. As described below, the configuration settings 136 and the application 132 are implemented to facilitate the deployment of new applications 140, and/or the modification of existing applications 140, and permitting existing access controls on the data sources 104 to extend to such newly deployed or modified applications 140. The application 132 and configuration settings 136 may also permit access controls to be applied to the data sources 104 at various levels of granularity.

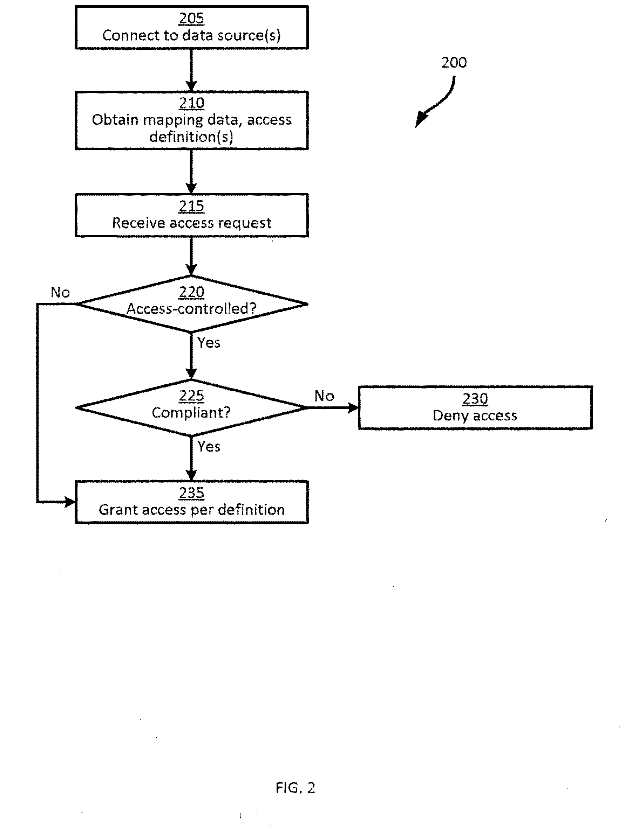

Turning to FIG. 2, a method 200 of managing access to the data sources 104 is illustrated. The method 200 is implemented by the server 116, e.g., via execution of the application 132.

At block 205, the server 116 is configured to establish a connection with each data source 104. The performance of block 205 need not be repeated for each instance of the method 200 performed. In some examples, the server 116 can establish persistent connections with the data sources 104, such that subsequent performances of the method 200 can omit block 205. The establishment of a connection with each data source at block 205 can employ any suitable mechanism for connecting to a database, file server, or the like. For example, the server 116 can be configured to obtain and store a network identifier of a computing device hosting each data source 104. In some examples, the server 116 can maintain, e.g., in the configuration settings 136, authentication credentials used to gain access to each data source 104. The server 116 can therefore, for example, establish a connection with a given data source 104 at block 205 by retrieving the above-mentioned credentials and sending an authentication request to a device hosting the data source 104 according to a suitable authentication protocol. In some examples, as noted earlier, the server 116 itself can host one or more of the data sources 104. In those examples, the performance of block 205 may not require the provision of authentication data or the transmission of an authentication request.

At block 210, the server 116 is configured to obtain mapping data defining a set of access category indicators. The access category indicators correspond to groups of individual application-level functions of the applications 140. In other words, each application 140 may include a number of functions, also referred to as access types. The access types of every application are mapped to a smaller number of access category indicators. Multiple access types, from one or more applications 140, can therefore be mapped to a single access category. As will be seen below, the mapping of more numerous (and generally application-specific) access types to less numerous categories that are shared across multiple applications 140 permits the server 116 to implement access control functionality that mitigates the need for reconfiguration when new applications 140 are deployed, and/or when existing applications 140 are modified.

The server 116 is also configured, at block 210, to obtain one or more access definitions. The access definitions and the mapping data can both be stored in the configuration settings 136, and need not be obtained at the same time. Further, as with the connections established with the data source(s) 104 at block 205, the access definitions and mapping data need not be obtained at each performance of the method 200. In other words, the server 116 can mediate multiple access requests as described below in connection with the remainder of the method 200, without performing blocks 205 and 210 for each request.

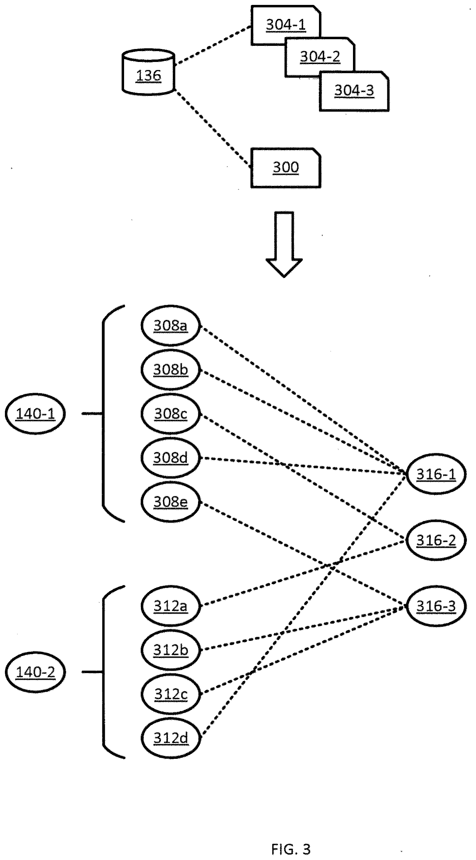

Turning to FIG. 3, example components of the configuration settings 136 are shown, including mapping data 300 and a plurality of access definitions 304-1, 304-2, and 304-3. As will be apparent, the configuration settings 136 can include fewer than the three access definitions 304 shown in FIG. 3, or (more frequently) a greater number of access definitions 304 than three. FIG. 3 also illustrates the mapping data 300 schematically. In particular, each application 140 can include a variety of application functions, also referred to as access types. As illustrated, the application 140-1 includes five access types 308a, 308b, 308c, 308d, and 308e. Each access type 308 can correspond to a specific function implemented by the application 140-1, e.g., invoked by selection of a user interface element or submission of a command by a client device 108. Similarly, the application 140-2 is shown as including four access types 312a, 312b, 312c, and 312d. Each application 140 can include smaller or greater numbers of access types. As will be apparent, some applications 140 may include tens or hundreds of access types.

The mapping data assigns each access type 308, 312, to one of a set of access categories 316. In the example of FIG. 3, three access categories 316-1, 316-2, and 316-3 are shown, although in other examples the mapping data 300 can define fewer than three or more than three categories 316. As indicated by the dashed lines joining access types 308 and 312 with categories 316, the mapping data 300 associates each access type 308 or 312 with one category 316. Access types from distinct applications, such as the applications 140-1 and 140-2, can be associated with the same category 316. In other words, while the access types 308, 312 are application-specific, the access categories 316 are application-agnostic. A potentially large number (e.g., hundreds or thousands) of application-specific access types can therefore be mapped to relatively small number (e.g., tens) of categories 316.

A variety of access categories 316 can be implemented, certain illustrative examples of which are described below. The set of available access categories can be reconfigured (e.g., expanded or contracted) for different deployments, and/or to reflect changes in the pool of applications 140 implemented by the system 100. An example access category 316 can include a visualization category, e.g., . mapped to any application-level function (that is, access type 308) that renders data on a display or the like. For a hosted application 140 with a graphical user interface, e.g., rather than a command-line interface, many or most application-level functions may be mapped to a visualization access category 316.

Another example access category 316 includes a query category, e.g., mapped to any application-level function that executes queries on a data source 104. Such an access category 316 permits, for example, granular control of which applications 140 are permitted to query the data sources 104, in contrast to accessing only data from the repository 144 (e.g., that data having been loaded to the repository 144 by another application-level function with query permission). In other examples, a distinct access category 316 can be mapped to application-level functions that sample data from the sources 104, e.g., as a special case of querying functionality.

A further example access category 316 includes an aggregation category, e.g., mapped to any application-level function that aggregates data from more than one source 104. As will be apparent, the aggregation access category may overlap with the query access category, e.g., to facilitate permitting a given application 140 to retrieve data from a given source 104 (via permissions associated with the query access category), but prevent that application 140 from combining the retrieved data with data from another source 104.

A further example access category 316 includes an analysis category, e.g., enabling control over whether an application 140 is permitted to perform statistical analysis or the like on data retrieved from one or more sources 104. The analysis category may also be mapped to application-level functions that perform data sampling, e.g., as a subset
The analysis category may further be mapped to application-level functions that provide retrieved data as input to natural language processing modules or other analytical functions. In some examples, the access categories 316 can also include a training eligibility category, e.g., mapped to any application-level functions that consume data from the data sources 104 to train machine learning models such as large language models, classifiers, or the like.

Various other access categories are also contemplated, and further examples may occur to those skilled in the art from the discussion herein. For instance, in some implementations, application-level functions that extract data from the server 116 (e.g., downloading data to a client device 108-1 or the like) can be mapped to an export access category.

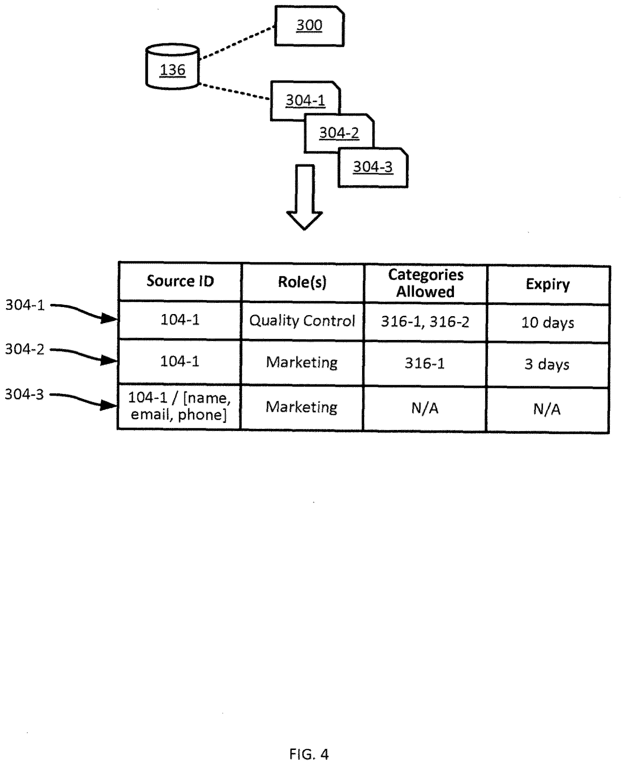

FIG. 4 illustrates example content of the access definitions 304. Each access definition includes, for example, one or more record identification criteria ("Source ID") indicating which portion(s) of the data source(s) 104 the access definition 304 relates to. The record identification criteria can include, for example, an identifier of a data source 104, as in the examples of the definitions 304-1 and 304-2. When the criterion is a data source identifier alone, the definition 304 applies to the entirety of that data source 104. Other definitions 304, such as the definition 304-3, include criteria identifying specific fields of the records in a data source 104. For example, the definition 304-3 applies only to the fields "name", "email", and "phone" of records in the data source 104-1. Various other criteria are also contemplated. For example, certain criteria can include values for comparison to values in the records of a data source 104, e.g., such that a definition 304 applies only to records created within a certain date range, or containing a certain value in a given field.

Each definition 304 can also include one or more role identifiers, account identifiers, or the like. The server 116 can maintain account data corresponding to the client devices 108 and/or operators thereof, including a value associating each account with a role, department, or the like. The role indicators permit multiple accounts (e.g., multiple operators of client devices 108) to be affected by a given access definition 304, without those accounts being named individually in the definition 304.

Each definition 304 can also include an access category identifier, and an access restriction associated with the access category identifier. In the example of FIG. 4, the definitions 304 include identifiers of permitted access categories, and any access categories not listed are not permitted. In other examples, each definition 304 can include explicit access settings for each access category 316 (e.g., indicating whether each category 316 is permitted or not permitted). In some examples, as shown in FIG. 4, each definition 304 can also include additional settings, such as an expiry timer indicating a length of time that access granted via the definition 304 persists.

The definitions 304 can define hierarchical access rules for the data sources 104. For example, the definition 304-2 grants access to any account in the "marketing" department or role to the entirety of the data source 104-1, using any application-level function within the category 316-1. According to the mapping 300 shown in FIG. 3, the definition 304-2 permits the use of access types 308a, 308b, 308d, and 312d. However, the definition 304-3 also applies to certain fields from records in the data source 104-1, and denies all access to accounts in the "marketing" department. In other words, the combined effect of the definitions 304-2 and 304-3 is to allow client devices 108 associated with certain accounts to execute certain application-level functions on partial records from the data source 104-1, preventing access to certain fields in those records.

As will be apparent to those skilled in the art, a wide variety of structures can be employed for the access definitions 304. In some examples, record identification criteria such as those in the definitions 304-2 and 304-3 can be combined in one definition 304, for instance. As will also be apparent, the definitions 304 do not include identifiers of application-level functions (that is, the access types 308, 312). Instead, by containing only category identifiers, the definitions 304 can be applied to any set of applications 140 at the server 116. When a new application 140 is deployed, for example, once the mapping data 300 is updated to map the new application's functions to the categories 316, the definitions 304 will apply to requests to use the new application's functions, even when the definitions 304 were created prior to deployment of the new application.

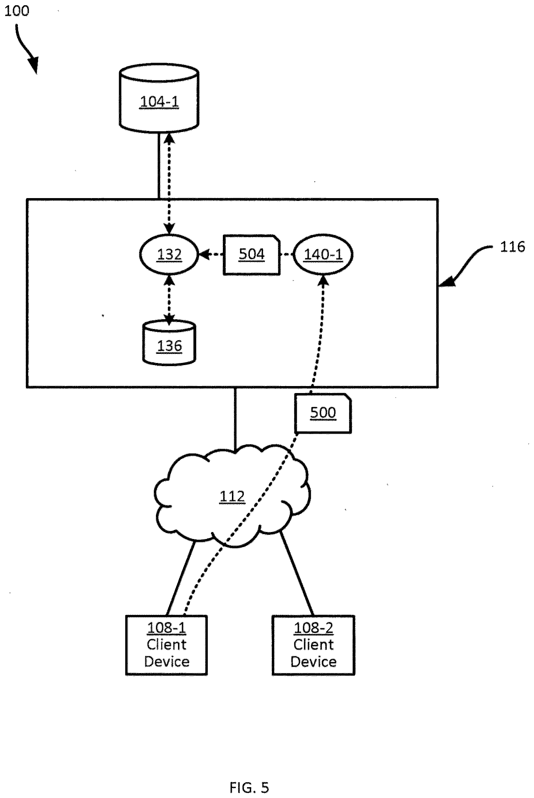

Returning to FIG. 2, at block 215 the server 116 is configured to receive an access request, e.g., from a client device 108. The request is to access at least a portion of the records of one or more data sources 104. For example, the request can be a request to open a particular file, a query to retrieve one or more fields from a set of records in a data source 104, or the like. The access request includes an access type indicator. Turning briefly to FIG. 5, for example, an access request 500 can be initiated by a client device 108 via selection, at the client device 108, of a function within the application 140-1 (e.g., via a web browser or the like).

At block 220, the server 116 is configured to determine whether the record(s) identified in the request from block 215 are subject to access control. The server 116, in other words, is configured to determine whether any access definitions 304 include record identification criteria corresponding to the requested record(s) in the request 500. The determination at block 220 can include, for example, searching the configuration settings 136 for definitions 304 that match the request 500. In other examples, the data sources 104 themselves can be updated with flags or the like that indicate identifiers of corresponding definitions. For example, the data source 104 can store a first identifier corresponding to the definition 304-1, a second identifier corresponding to the definition 304-2, and a third identifier specifically associated with the "name", "email", and "phone" fields and corresponding to the definition 304-3.

When the determination at block 220 is negative, the server 116 bypasses blocks 225 and 230, and proceeds directly to block 235 to grant access according to the request. As will be apparent, when the determination at block 220 is negative, full access, using any application-level function, may be permitted. However, the server 116 may still mitigate unauthorized dissemination of sensitive data, as a result of the access taking place within the managed environment of the server 116.

When the determination at block 220 is affirmative, at block 225 the server 116 is configured to determine at block 225; whether the request from block 215 is compliant with the access definition(s) that apply to the request. For example, as shown in FIG. 5, the application 140-1 can be configured, in response to receiving the request 500, to pass a message 504 to the application 132 including the content of the request 500, as well as an application identifier and/or an access type identifier. The application 132 is configured, in turn, to retrieve any applicable access definitions 304 from the configuration settings 136, and to determine whether the request is permissible based on those definitions. For example, the server 116 can determine whether a role or department assigned to the client device 108 is among those listed in the definition(s) 304 as being permitted access to the requested records. The server 116 can also determine which category 316 corresponds to the requested access type (e.g., the application-level function), and whether that category complies with the restrictions defined in the definition(s) 304.

When the determination at block 225 is negative, the request from block 215 is denied at block 230, and the client device 108 may receive an error message, notification, or the like indicating that the request was denied. When the determination at block 225 is affirmative, the server 116 proceeds to block 235, and grants access according to the request, based on the access definition(s) identified at block 220. For example, the server 116 can return the requested records to the application 140-1 to enable the application 140-1 to execute the requested function. In some examples, the server 116 can initiate an expiry timer, e.g., to determine how long the records returned to the application 140-1 can be stored in local storage 144, viewed within the application 140-1, or the like. When the expiry timer (if implemented) expires, access can be terminated.

Those skilled in the art will appreciate that in some embodiments, the functionality of the applications 132 and 140 may be implemented using pre-programmed hardware or firmware elements (e.g., application specific integrated circuits (ASICs), electrically erasable programmable read-only memories (EEPROMs), etc.), or other related components.

The scope of the claims should not be limited by the embodiments set forth in the above examples, but should be given the broadest interpretation consistent with the description as a whole.

## Claims

1. A method, comprising:
establishing, at a server, a connection with a data source storing a plurality of records;
storing, at the server, mapping data defining a set of access category indicators, and for each access category indicator, a plurality of corresponding access type indicators;
storing, at the server, an access definition including (i) a record identification criterion, (ii) one of the access category indicators, and (iii) an access restriction associated with the access category indicator;
receiving, from a client device, a request to access a portion of the plurality of records, the request including one of the access type indicators;
determining, from the mapping data, that the access type indicator corresponds to the access category indicator of the access definition; and
in response to determining that the portion of the plurality of records satisfies the record identification criterion, responding to the request according to the access restriction.

2. The method of claim 1, further comprising:
providing, at the server, a plurality of hosted data access functions to the client device;
wherein receiving the request from the client device includes receiving a selection of one of the hosted data access functions.

3. The method of claim 2, wherein the plurality of hosted data access functions correspond to respective ones of the access type indicators.

4. The method of any one of claims 1 to 3, wherein the access definition includes:
a plurality of access category indicators; and ,
for each access category indicator, a corresponding access restriction.

5. The method of claim 4, wherein the access restriction includes an obfuscation indicator; and
wherein responding to the request includes providing access to a first portion of a requested record, and obfuscating a second portion of the requested record.

6. The method of claim 4, wherein the access restriction includes a time period; and
wherein responding to the request includes providing access to the portion of the plurality of records until the time period expires.

7. The method of claim 6, wherein providing access to the portion of the plurality of records includes generating a copy of the plurality of records in hosted storage at the server.

8. The method of any one of claims 1 to 7, wherein the access definition further includes a requestor type indicator, and an access restriction criterion corresponding to the requestor type indicator.

9. A computing device, comprising:
a memory storing:
mapping data defining a set of access category indicators, and for each access category indicator, a plurality of corresponding access type indicators; and
an access definition including (i) a record identification criterion, (ii) one of the access category indicators, and (iii) an access restriction associated with the access category indicator
a processor configured to:
establish a connection with a data source storing a plurality of records;
receive, from a client device, a request to access a portion of the plurality of records, the request including one of the access type indicators;
determine, from the mapping data, that the access type indicator corresponds to the access category indicator of the access definition; and
in response to determining that the portion of the plurality of records satisfies the record identification criterion, respond to the request according to the access restriction.

10. The computing device of claim 9, wherein the processor is further configured to perform the steps of any one of claims 1 to 8.

11. A non-transitory computer-readable medium storing a plurality of instructions executable by a processor of a computing device to:
store mapping data defining a set of access category indicators, and for each access category indicator, a plurality of corresponding access type indicators;
store an access definition including (i) a record identification criterion, (ii) one of the access category indicators, and (iii) an access restriction associated with the access category indicator;
establish a connection with a data source storing a plurality of records;
receive, from a client device, a request to access a portion of the plurality of records, the request including one of the access type indicators;
determine, from the mapping data, that the access type indicator corresponds to the access category indicator of the access definition; and
in response to determining that the portion of the plurality of records satisfies the record identification criterion, respond to the request according to the access restriction.

12. The non-transitory computer-readable medium of claim 11, wherein execution of the instructions further configures the processor to perform the steps of any one of claims 1 to 8.
